# FASCICULE DE BREVET EUROPEEN

(11) **EP 1 458 135 B1**
(45) Date de publication et mention de la délivrance du brevet: **09.08.2006**
(21) Numéro de dépôt: 04100645.3
(22) Date de dépôt: 18.02.2004
(51) Int. Cl.: H04L 12/26, H04L 29/06

(54) **Procédé de test de l'état de connexion entre un client et un serveur sur un réseau numérique**
Verfahren zum Durchtesten des Zustandes der Anbindung zwischen einem Klient und einem Server über ein digitales Netzwerk
Method for testing the connection status between a client and a server on a digital network

(30) Priorité: 20.02.2003 FR 0350031
(43) Date de publication de la demande: 15.09.2004
(73) Titulaire: SAGEM Communication, 75015 Paris (FR)
(72) Inventeur: Ferreri, Jean-Thomas, 95800 Cergy St Christophe (FR)
(74) Mandataire: Camus, Olivier Jean-Claude

(56) Documents cités:
- WO-A-01/65391
- US-A1- 2002 165 954

## Description

### DOMAINE TECHNIQUE DE L'INVENTION

La présente invention a pour objet un procédé de test de l'état de connexion entre un serveur de type HTTP et un client de ce serveur. Le procédé selon l'invention est destiné à être mis en oeuvre avec des documents structurés selon le format dit HTML (acronyme de l'expression HyperText Markup Language en anglais, pour "Langage à Balise Hypertexte"), par exemple enrichi avec des instructions en langage de type Javascript (R). L'invention a notamment pour but de proposer, suite à la détermination de l'état de connexion entre le navigateur et le serveur, une gestion d'une procédure d'erreur lorsqu'une tentative d'accès au serveur a échoué, gestion tant au niveau de l'apparition de messages d'erreur qu'au niveau de la poursuite de la tentative de connexion. Une application immédiate du procédé selon l'invention est sa mise en oeuvre dans le cadre d'opérations de rafraîchissement de documents dits pages web lorsqu'une telle page est destinée à être mise à jour régulièrement. Les documents US2002165954 et WO0165391 sont des examples d'art anteriéur.

Le domaine de l'invention est, d'une façon générale, celui du réseau Internet, qui est en fait une ensemble de réseaux interconnectés. Préalablement à la description de l'invention en elle-même, un lexique relatif à différents termes employés ultérieurement est proposé afin de fixer le vocabulaire employé :
- serveur HTTP : serveur dédié au protocole HTTP (acronyme de l'expression HyperText Transfer Protocol, en anglais, c'est à dire Protocole de Transmission Hypertexte), qui met à disposition de tout utilisateur d'un ordinateur connecté sur un réseau numérique un ensemble de pages écrite dans un langage à balise de type HTML.
- navigateur: outil informatique de type logiciel, installé sur un ordinateur, qui permet de télécharger et de visualiser, dans des fenêtres d'affichage, des informations issues d' un serveur via un réseau, notamment un réseau muni du protocole TCP/IP (Transmission Control protocol/ Internet Protocol en anglais, c'est à dire Protocole de Controle de Transport/ Protocole Internet) mis en oeuvre sur un intranet ou l'Internet ; un navigateur Internet est spécifique au réseau Internet et plus particulièrement à un ensemble de serveurs accessibles par une interface graphique aussi appelés "serveurs web" ou "sites web".
- page, ou page web, ou page Internet : élément de base d'un site web ; par exemple, un fichier au format HTML.
- applet : programme informatique de petite taille, souvent accompagné de données bien plus volumineuses que lui, et conçu pour être téléchargé via un réseau à chaque fois qu'on veut l'utiliser, en particulier par un navigateur qui se chargera de l'exécuter.
- cadre : traduction française du terme anglais fréquemment employé "frame" ; fenêtre secondaire résultant de la division d'une fenêtre principale d'affichage d'un navigateur ; on trouve un document, par exemple au format HTML, dans chacun des cadres issus de cette division, chaque cadre possédant son propre URL.
- HTML : (HyperText Markup Language en anglais, pour "Langage à Balise Hypertexte"); format particulier de document du web, constitué de marqueurs interprétables par un navigateur pour être exécutés.
- Java (R): Langage de programmation, pouvant éventuellement être inséré dans un document HTML sous forme d'applet.
- Javascript (R) : langage de script relativement simple et abondamment utilisé pour enrichir les documents HTML.
- plug-in : extension à une application qui vient s'intégrer à l'application elle-même.
- script : suite d'instructions simples permettant d'automatiser certaines tâches.
- URL (Uniform Resource Locator en anglais) : adresse d'accès sur un réseau TCP/IP
- XML (eXtensible Markup Language en anglais) : norme d'échange de documents informatisés.

Lorsqu'un utilisateur disposant d'un ordinateur décide de se connecter à un serveur HTTP, via le réseau numérique, le navigateur télécharge depuis le serveur des informations à un format spécial, le plus souvent HTML. Ces informations sont contenues dans un fichier, qui, une fois téléchargé complètement, est interprété par le navigateur. Ce fichier peut notamment contenir des informations de données affichables et des informations relatives au format dans lequel il faut afficher ces données. Les données peuvent être du texte, des images ou des sons. Par exemple, une image, dont l'adresse sur le réseau est contenue dans un fichier au format HTML, peut être localisée et téléchargée par un navigateur après que ce dernier a lu et interprété ladite adresse, puis affichée par le navigateur.

Certaines pages HTML comportent des références à d'autres pages. Ces références sont affichées dans un format particulier. Le fait d'utiliser, par exemple, un dispositif de pointage pour sélectionner l'une de ces références sur un écran où elle est affichée permet de passer d'une page à une autre. Certaines pages peuvent par ailleurs comporter un script, dit script de téléchargement, permettant un téléchargement automatique et ultérieur d'une nouvelle page, cette nouvelle page pouvant être soit la même page ayant subi une actualisation, un rafraîchissement, soit une pagedifférente.

### ARRIERE-PLAN TECHNOLOGIQUE DE L'INVENTION

Dans le cas où une page HTML ordonne son propre téléchargement ultérieur, par exemple dans une version actualisée, le script de téléchargement peut ordonner ce téléchargement de façon périodique. De telles pages peuvent par exemple être utilisées pour suivre, sans intervention de l'utilisateur, un événement particulier, par exemple l'évolution d'un événement sportif, d'un cours de bourse, ou pour mettre à jour la disponibilité de certains éléments, tels qu'une imprimante sur un réseau local.

Lorsque la connexion réseau entre le navigateur et le serveur IHTTP auquel il est connecté est interrompue, toute tentative d'accès au serveur HTTP est rendue impossible. Une telle tentative d'accès, qu'elle soit exécutée de façon automatique au moyen d'un script de téléchargement placé dans une page téléchargée, ou suite à une action appropriée de l'utilisateur, se traduit alors par l'apparition d'un message d'erreur sur l'écran de l'utilisateur, ledit message d'erreur étant spécifique au navigateur utilisé. Du fait du fonctionnement du navigateur, le message d'erreur est affiché dans le cadre associé au script de téléchargement, qui correspond, dans l'état de la technique, au cadre qui doit faire l'objet d'un rafraîchissement.

Or cette façon de gérer les interruptions de connexion réseau entre le navigateur Internet et le serveur Internet pose un certain nombre d'inconvénients et de problèmes.

D'une part, le message d'erreur affiché est le plus souvent inesthétique, et n'est jamais spécifique au serveur HTTP auquel l'utilisateur était connecté avant l'interruption de connexion réseau. D'autre part, le message d'erreur étant affiché dans le cadre qui doit faire l'objet d'un rafraîchissement, les précédentes informations affichées dans ce cadre ne sont plus visibles pour l'utilisateur. Enfin, rien n'est prévu pour tenter de rétablir automatiquement la connexion entre le navigateur et le serveur HTTP, l'utilisateur devant intervenir manuellement pour espérer obtenir une page actualisée du serveur auquel il était connecté.

Dans l'état de la technique, on connaît certaines technologies qui ont notamment tenté de répondre à ces problèmes. Ces technologies font notamment appel à la norme XML ou au langage Java (R), avec nécessairement l'utilisation d'applet ou de plug-in particuliers qui viennent s'ajouter, quand c'est possible, au fonctionnement basique d'un navigateur. Or ces technologies sont trop évoluées pour être compatibles avec une grande partie des navigateurs actuellement disponibles sur le marché, et leurs systèmes de gestion de détection d'absence de connexion réseau demeure alors inefficace.

### DESCRIPTION GENERALE DE L'INVENTION

Le procédé selon l'invention propose une solution aux problèmes et inconvénients qui viennent d'être exposés. Dans l'invention, on propose une solution pour gérer les interruptions de connexion entre un serveur HTTP et un client de ce serveur de type navigateur qui, d'une part, tout en étant directement fonctionnelle avec n'importe quel navigateur, informe, de façon non encombrante et spécifique à chaque serveur, un utilisateur d'une absence de connexion et qui, d'autre part, tente automatiquement de rétablir la connexion entre le navigateur et le serveur.

A cet effet, dans l'invention, on propose l'utilisation de scripts simples, directement intégrés dans un document au format HTML qui correspond à une première page téléchargée associée au site convoité. On prévoit notamment, dans l'invention, de scinder ladite première page en au moins un cadre visible et un cadre invisible, un script de téléchargement d'une page de données dans le cadre invisible étant compris dans une page d'affichage du cadre visible. Le script de téléchargement de la page de données permet de tester, de façon continue, l'état de connexion entre le navigateur et le serveur Internet. De façon régulière, une information est transmise de la page de données vers la page d'affichage, associée au cadre visible, pour qu'une information relative à l'état de connexion puisse être affichée, ceci afin d'en informer l'utilisateur. Le script de téléchargement peut en outre, comporter un ensemble d'instructions permettant de tenter de rétablir automatiquement la connexion réseau quand celle-ci a été interrompue.

L'invention concerne donc essentiellement un procédé de test de l'état de connexion entre un client et un serveur sur un réseau numérique, ledit client étant de type navigateur et ledit serveur de type HTTP, caractérisé en ce qu'il comporte les différentes étapes consistant à :
- structurer une première page de type HTML, accessible sur le serveur, ladite page comportant au moins un premier cadre visible attaché à au moins une page d'affichage, et un deuxième cadre invisible attaché à au moins une page de données ;
- télécharger, au moyen du navigateur et depuis le serveur, la première page de type HTML ;
- télécharger la page d'affichage et télécharger la page de données, ladite page d'affichage comportant au moins une variable avec une valeur initiale préalablement déterminée, un premier script pour commander le téléchargement de la page de données, et un deuxième script pour comparer une valeur instantanée de la variable avec la valeur initiale de ladite variable, et ladite page de données comportant au moins un troisième script, exécuté automatiquement à chaque téléchargement de la page de données, pour affecter à la variable de la page d'affichage une valeur modifiée différente de la valeur initiale;
- à chaque exécution du deuxième script, déterminer si la valeur instantanée de la variable est la valeur initiale de la variable et, en cas d'égalité, détecter ainsi une absence de connexion réseau entre le navigateur et le serveur Internet, ou , en cas d'inégalité, détecter ainsi un état de connexion réseau entre le navigateur Internet et le serveur Internet.

Le procédé selon l'invention peut comporter une ou plusieurs étapes supplémentaires, parmi les suivantes, consistant à :
- exécuter le premier script toutes les M secondes et exécuter le deuxième script toutes les N secondes, N étant supérieur à M, le rapport entre N et M pouvant, dans un exemple de mise en oeuvre particulier, être compris entre 5 et 15.
- à chaque exécution du deuxième script conduisant à la détection d'un état de connexion entre le navigateur et le serveur sur le réseau, affecter de nouveau la valeur initiale à la variable booléenne, et/ou effectuer une opération de mise à jour de la page d'affichage.
- à chaque exécution du troisième script, effectuer une opération de mise à jour de la page d'affichage et/ou commander la suspension de toute exécution du premier script jusqu'à une exécution du deuxième script..
- à chaque exécution du deuxième script conduisant à la détection d'une absence de connexion entre le navigateur et le serveur sur le réseau, orienter un message d'erreur, émis par le navigateur Internet et relatif à une information d'absence de connexion, vers le deuxième cadre invisible et/ou faire apparaître, au moyen d'un quatrième script de la page d'affichage, une information d'erreur dans le premier cadre visible.

Un autre objet de l'invention est un document HTML pouvant être utilisé comme première page HTML dans une des mises en oeuvre du procédé qui vient d'être mentionné. Le document HTML est, dans un exemple préféré de l'invention, enrichi avec des instructions en langage Javascript (R)

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- à la figure 1, un organigramme illustrant des étapes préliminaires du procédé selon l'invention ;
- à la figure 2, un organigramme illustrant la mise en oeuvre du procédé selon l'invention en présence d'une connexion réseau ;
- à la figure 3, un organigramme illustrant la mise en oeuvre du procédé selon l'invention en l'absence de connexion réseau.

### DESCRIPTION DES FORMES DE REALISATION PREFEREES DE L'INVENTION

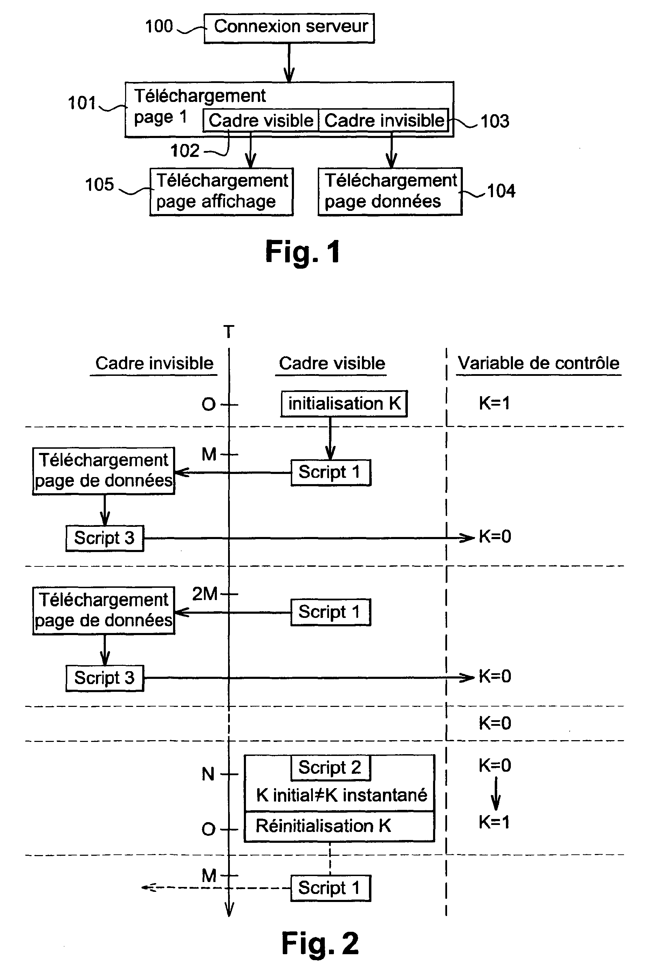

A la figure 1, une première étape 100 intervenant dans le procédé selon l'invention est constituée par un établissement de connexion entre un navigateur Internet et un serveur Internet, hébergeant un ou plusieurs sites Internet possédant chacun leurs propres URL. A cet effet, le navigateur et le serveur communiquent en respectant le protocole HTTP. Dans un premier temps, le navigateur procède à une opération dite de résolution d'une adresse alphanumérique saisie par l'utilisateur, correspondant à l'adresse d'un site qu'il souhaite consulter, pour obtenir une adresse IP (Internet Protocol en anglais). Une fois l'adresse IP obtenue, le navigateur émet une requête dite requête "get", standardisée par le protocole HTTP, vers cette adresse IP. Cette requête est accompagnée d'un ensemble de paramètres nécessaires au serveur destinataire pour transmettre au navigateur la page web que l'utilisateur cherche à obtenir, cette page web correspondant à un site particulier du serveur.

Cette transmission de la page web convoitée, dite première page, correspond à une étape 101 de téléchargement. Selon l'invention, la première page est un document au format HTML, composée d'au moins un cadre visible 102 et d'un cadre invisible 103.

La Table 1 montre un exemple de réalisation de la partie dite "index" de cette première page.

**Table I**

| <!-- Page HTML : index.htm --> | | |
|---|---|---|
| <html> | | |
| <frameset rows="*,0" framespacing="0" frameborder="0" | | |
| border="0"> | | |
| <frame src="Mainframe.htm" name="Frame_Visible" | | |
| | | framespacing="0" frameborder="0" border="0" |
| | | marginwidth="0" marginheight="0"> |
| <frame src="NetworkCheckup.htm" name="Frame_Invisible" | | |
| | | framespacing="0" frameborder="0" border="0" |
| | | scrolling="No" noresize |
| | | marginwidth="0" marginheight="0"> |
| </frameset> | | |
| <body> | | |
| </body> | | |
| </html> | | |

Le cadre visible 102 est destiné à restituer différentes informations à afficher, les informations associées au cadre invisible 103 n'étant pas affichées. D'une façon générale, lorsqu'un navigateur reçoit un document, par exemple au format HTML, il interprète ce document de façon à déterminer la structure, appelée frameset, de la page à afficher associée à ce document. Dans l'invention, le frameset de la première page indique que le navigateur doit émettre au moins deux requêtes "get", une première requête associée au cadre visible 102 auquel sera affectée, conformément au contenu du code source de la première page, une page dite page d'affichage, et une deuxième requête associée au cadre invisible 103 auquel sera affectée, toujours selon le code source de la première page, une page dite page de données. Les pages d'affichage et de données sont ainsi téléchargées respectivement dans une étape 104 et une étape 105 de l'organigramme de la figure 1.

La Table 2 suivante montre un exemple de réalisation du cadre visible 102 de la première page.

**Table 2**

| <!-- Page HTML : Mainframe.htm --> | |
|---|---|
| <html> | |
| <head> | |
| <script language="JavaScript" type="text/javascript"> | |
| function NetworkCheckupDownload() { | |
| | parent.frames["Frame_Invisible"].document.location.reload(); |
| | window.setTimeout("NetworkCheckupDownload();",3000); |
| } | |
| function NetworkCheckup() { | |
| | NetworkError = document.forms["variables"].NetworkError; |
| | if (NetworkError.value==0) NetworkError.value = 1; |
| | else alert("Coupure reseau détectée !"); <!-- Traitement de |
| l'erreur reseau --> | |
| | window.setTimeout("NetworkCheckup();",10000); |
| } | |
| function initBody() { | |
| | window.setTimeout("NetworkCheckupDownload();",3000); |
| | window.setTimeout("NetworkCheckup();",10000); |
| } | |
| </script> | |
| </head> | |
| <body onLoad="initBody();"> | |
| <form name="variables" action="#"> | |
| | <input type="hidden" name="NetworkError" value="1 "> |
| </form> | |
| <!-- Affichage visible par l'utilisateur --> | |
| Bienvenue ... | |
| </body> | |
| </html> | |

Selon cet exemple particulier de l'invention, la page d'affichage comporte notamment :
- une variable K, dite variable de contrôle, initialisée à une valeur initiale ; dans cet exemple, la variable de contrôle est une variable booléenne, dont la valeur initiale est 1. Dans la suite de la description, la variable de contrôle sera toujours décrite comme étant une variable booléenne, l'invention n'étant évidemment pas limitée à cet exemple de réalisation.
- un premier script, script 1, dont l'exécution a pour effet principal de provoquer le téléchargement de la page de données (Fonction NetworkCheckupDownload). Dans un exemple particulier de réalisation, le premier script est conçu pour être exécuté périodiquement toutes les M secondes. Typiquement, M peut varier entre 1 et 10 secondes.
- un deuxième script, script 2, dont l'exécution a pour effet principal de comparer la valeur instantanée de la variable de contrôle (Fonction NetworkCheckup), c'est à dire la valeur de la variable de contrôle au moment où le deuxième script est exécuté, avec la valeur initiale de cette variable. Dans un exemple particulier de réalisation, le deuxième script est conçu de telle sorte qu'il s'exécute toutes les N secondes, N étant un nombre supérieur au nombre M. Typiquement, M peut varier entre 5 secondes et 20 secondes, le rapport entre M et N pouvant, pour sa part, varier de 5 et 15.

Toujours selon cet exemple particulier de l'invention, la page de données comporte notamment :
- un troisième script, script 3, pour affecter à la variable de contrôle de la page d'affichage une valeur différente de la valeur initiale de cette variable. Ainsi, si la variable de contrôle est une variable booléenne initialisée à 1, le troisième script lui affecte la valeur 0. Le troisième script est exécuté automatiquement à chaque téléchargement de la page de données. Par ailleurs, le troisième script peut être complété, ou lancer l'exécution d'un quatrième script, pour permettre la mise à jour de la page d'affichage afin que le cadre visible 102 comporte une page actualisée La Table 3 suivante montre une façon d'implémenter ce troisième script.

**Table 3**

| <!-- Page HTML : NetworkCheckup.htm --> |
|---|
| <html> |
| <body |
| on Load="parent.frames['Frame_Visible'].document.forms['variabl |
| es'].NetworkError.value = 0;"> |
| </body> |
| </html> |

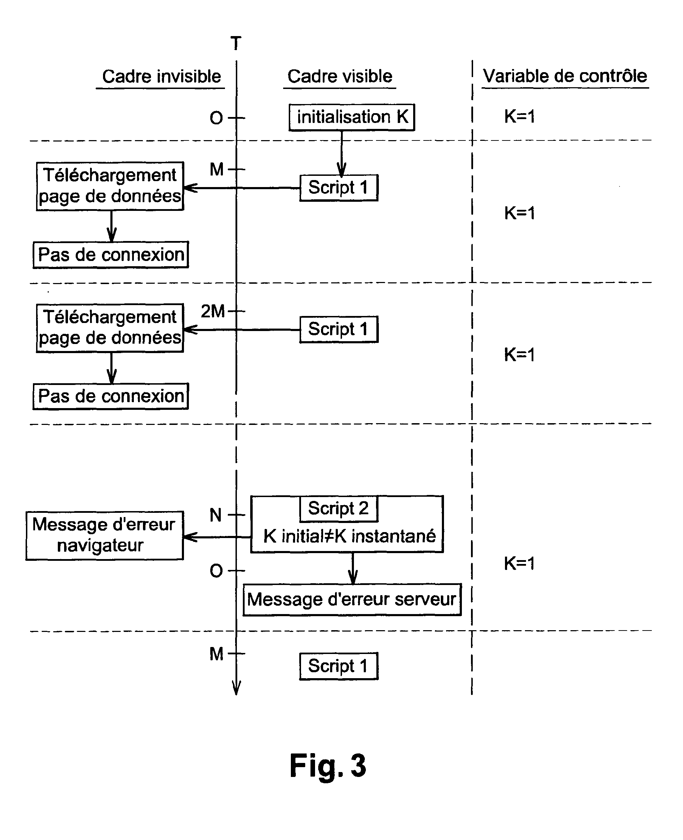

Les figures 2 et 3 donnent un exemple de mise en oeuvre du procédé selon l'invention, respectivement dans le cas d'une connexion réseau ininterrompue entre le navigateur et le serveur Internet, et dans le cas d'une connexion réseau interrompue.

Sur ces figures, la partie gauche représente les événements attachés à la page de données, c'est à dire dans le cadre invisible 103, et la partie centrale les événements attachés à la page d'affichage, c'est à dire dans le cadre visible 102. Ces deux parties sont séparées par un axe temporel vertical 200 servant à repérer les moments d'exécution des différents événements décrits. Sur la partie droite de ces figures, on a indiqué la valeur instantanée prise par la variable de contrôle K à chaque événement intervenant.

Le fonctionnement du procédé selon l'invention lors d'absence d'interruption de connexion réseau est à présent expliqué, essentiellement en référence à la figure 2 :

On considère l'instant T=0 comme le début d'un cycle de test, c'est à dire un instant où la variable de contrôle K vient d'être affectée à sa valeur initiale, K=1. La fin d'un cycle de correspond à l'instant où le deuxième script est totalement exécuté, la variable de contrôle étant alors de nouveau affectée à sa valeur initiale K=1. L'exécution des différents scripts qui seront mentionnés requiert une durée très inférieure à M. A T=M, le premier script est exécuté. Il commande le téléchargement de la page de données. En cas de connexion réseau, ce téléchargement est effectué avec succès, et le troisième script, qui a pour effet de modifier la variable de contrôle K, est exécuté, instantanément dans l'exemple décrit. La variable de contrôle est alors modifiée, et on a K=0.

Dans une première variante de l'invention, correspondant à celle illustrée à la figure 2, le premier script, et, en conséquence, le troisième script, sont répétés toutes les M secondes jusqu'à l'instant T=N, où le troisième script est exécuté. En comparant la valeur instantanée de la variable de contrôle (K=0) avec sa valeur initiale, (K=1), le troisième script interprète alors la différence de valeur comme une preuve de la connexion réseau et n'émet pas de message d'erreur pour signaler une quelconque interruption de réseau. La variable de contrôle K est réinitialisée à sa valeur initiale 1, et un nouveau cycle peut être entamé.

Dans une deuxième variante de l'invention, différente de celle représentée à la figure 2, on prévoit dans la page d'affichage un script particulier capable de détecter un changement de la valeur de la variable K dès que ce changement intervient. Pour le cycle de test en cours, il est alors inutile d'exécuter le premier script et le deuxième script dès lors que la variable de contrôle a pris une valeur instantanée différente de sa valeur initiale.

Dans le procédé selon l'invention, dans le cas où la connexion par le réseau n'est pas interrompue, on propose plusieurs solutions pour actualiser la page d'affichage :
- dans une première solution, le troisième script, ou un autre script de la page de données dont l'exécution est commandée par le troisième script, permet d'une part le téléchargement d'informations actualisées de la page web faisant l'objet de l'affichage, et d'autre part, la transmission de ces informations actualisées à la page d'affichage où elles seront traitées pour être affichées. En d'autres termes, les informations affichées sont rafraîchies toutes les M secondes.
- dans une deuxième solution, c'est le deuxième script qui, lors de son exécution, entraîne la modification de certaines informations affichées, par exemple à l'aide d'informations récupérées lors du téléchargement de la page de données au moyen du troisième script. En d'autres termes, les informations affichées sont rafraîchies toutes les N secondes.

Le fonctionnement du procédé selon l'invention lors d'une interruption de la connexion par le réseau est à présent expliqué, essentiellement en référence à la figure 3 :

Encore une fois, on considère sur cette figure le déroulement d'un cycle de test. A T=0 la variable de contrôle K est affectée à sa valeur initiale K=1. A T=M, le premier script est exécuté. Il commande le téléchargement de la page de données. Durant tout le cycle de test, la connexion par le réseau étant interrompue, le téléchargement de la page de données actualisée ne peut pas être effectué, et le troisième script n'est alors jamais exécuté. En conséquence, la valeur de la variable de contrôle n'est pas modifiée ; l'exécution du deuxième script, à T=N, permet alors de révéler l'interruption de connexion.

Dans l'invention, c'est une requête de type "get" destinée à télécharger la page de données dans le cadre invisible 103 qui a échoué. Selon le fonctionnement habituel des navigateurs, un message d'erreur, propre au navigateur, est alors élaboré et transmis au cadre associé à la requête ayant échoué, c'est à dire au cadre invisible 103. En conséquence, ce message d'erreur, habituellement inesthétique et encombrant, ne sera pas visible pour l'utilisateur. Dans l'invention, on prévoit, dans le cas illustré à la figure 2, d'afficher une information relative à l'absence de connexion dans le cadre visible, cet affichage étant par exemple contrôlé par un script particulier de la page d'affichage qui se déclenche dans le cas où le deuxième script a permis de conclure à une absence de connexion.

L'information relative à l'absence de connexion peut par exemple être un symbole discret, de type rond rouge, qui ne fait pas disparaître la page web en cours de visualisation. Le symbole peut être spécifique au serveur, ou à un des sites du serveur, auquel l'utilisateur était connecté, ce symbole ayant préalablement fait l'objet d'un téléchargement préalable dans une mémoire cache, par exemple lors du téléchargement 101 de la première page.

Dans l'invention, on prévoit de recommencer automatiquement le cycle de test, qu'une absence de connexion ait été détectée ou non. Ainsi, dans le cas d'une absence de connexion, l'utilisateur n'a aucune opération manuelle à effectuer pour tenter d'actualiser sa page d'affichage.

Dans un cas de figure intermédiaire de ceux représentés aux figures 2 et 3, correspondant au cas où une interruption de connexion survient au cours d'un cycle de test, un téléchargement de la page de données, et donc une exécution du troisième script ayant cependant réussi à se produire durant le cycle de test considéré, on prévoit, dans une variante de l'invention, l'utilisation d'une variable de contrôle non booléenne permettant d'indiquer le nombre de téléchargements de la page de données ayant échoué au cours d'un cycle de test. Une information indiquant le nombre de téléchargements échoués peut alors, dans un mode de mise en oeuvre particulier, être restituée dans le cadre visible.

Dans un mode de mise en oeuvre préféré de l'invention, les différents scripts sont codés en langage Javascript. Le document HTML téléchargé est ainsi un document HTML enrichi avec des instructions en langage Javascript (R). Une telle façon de procéder améliore encore la compatibilité du procédé selon l'invention avec l'ensemble des navigateurs existant.

Dans l'invention, on a donc réalisé une séparation entre la page d'affichage et un processus de rafraîchissement de cette page en effectuant une répartition judicieuse, entre le cadre visible 102 et le cadre invisible 103, des différents scripts intervenant. Un document HTML, présentant une répartition des différents scripts telle que décrite dans l'une quelconque des variantes qui viennent d'être décrites, constitue également un objet de l'invention.

La description précédente décrit le procédé selon l'invention dans le cas d'un navigateur Internet et d'un serveur Internet; il va de soi que le même procédé pourrait mettre en oeuvre tout autre serveur de type HTTP et un client associé, notamment sur un intranet.

## Revendications

1. Procédé de test de l'état de connexion entre un client et un serveur sur un réseau numérique, ledit client étant de type navigateur et ledit serveur de type HTTP, comportant les différentes étapes consistant à :
- structurer une première page de type HTML, accessible sur le serveur, ladite page comportant au moins un premier cadre visible (102) attaché à au moins une page d'affichage, et un deuxième cadre invisible (103) attaché à au moins une page de données ;
- télécharger (101), au moyen du navigateur et depuis le serveur, la première page de type HTML ; **caractérisé en ce qu'**il comporte les étapes suivantes:
- télécharger (105) la page d'affichage et télécharger (104) la page de données, ladite page d'affichage comportant au moins une variable (K) avec une valeur initiale préalablement déterminée, un premier script (script 1) pour commander le téléchargement de la page de données, et un deuxième script (script 2) pour comparer une valeur instantanée de la variable (K) avec la valeur initiale de ladite variable (K), et ladite page de données comportant au moins un troisième script (script 3), exécuté automatiquement à chaque téléchargement de la page de données, pour affecter à la variable (K) de la page d'affichage une valeur modifiée différente de la valeur initiale;
- à chaque exécution du deuxième script (script 2), déterminer si la valeur instantanée de la variable (K) est la valeur initiale de la variable (K) et, en cas d'égalité, détecter ainsi une absence de connexion réseau entre le navigateur et le serveur, ou , en cas d'inégalité, détecter ainsi un état de connexion réseau entre le navigateur et le serveur.

2. Procédé selon la revendication précédente **caractérisé en ce qu'**il comporte les différentes étapes supplémentaires consistant à :
- exécuter le premier script (script 1) toutes les M secondes ;
- exécuter le deuxième script (script 2) toutes les N secondes, N étant supérieur à M.

3. Procédé selon la revendication précédente **caractérisé en ce que** le rapport entre N et M est compris entre 5 et 15.

4. Procédé selon l'une au moins des revendications précédentes **caractérisé en ce qu'**il comporte l'étape supplémentaire consistant à :
- à chaque exécution du deuxième script (script 2) conduisant à la détection d'un état de connexion entre le navigateur et le serveur sur le réseau, affecter de nouveau la valeur initiale à la variable (K).

5. Procédé selon l'une au moins des revendications précédentes **caractérisé en ce qu'**il comporte l'étape supplémentaire consistant à :
- à chaque exécution du deuxième script (script 2) conduisant à la détection d'un état de connexion entre le navigateur et le serveur sur le réseau effectuer une opération de mise à jour de la page d'affichage.

6. Procédé selon l'une au moins des revendications précédentes **caractérisé en ce qu'**il comporte l'étape supplémentaire consistant à :
- à chaque exécution du troisième script (script 3), effectuer une opération de mise à jour de la page d'affichage.

7. Procédé selon l'une au moins des revendications 2 à 6 **caractérisé en ce qu'**il comporte l'étape supplémentaire consistant à :
- à chaque exécution du troisième script (script 3), commander la suspension de toute exécution du premier script (script 1) jusqu'à une exécution du deuxième script (script 2).

8. Procédé selon l'une au moins des revendications précédentes **caractérisé en ce qu'**il comporte l'étape supplémentaire consistant à :
- à chaque exécution du deuxième script (script 2) conduisant à la détection d'une absence de connexion entre le navigateur et le serveur sur le réseau, orienter un message d'erreur, émis par le navigateur et relatif à une information d'absence de connexion, vers le deuxième cadre invisible (103).

9. Procédé selon l'une au moins des revendications précédentes **caractérisé en ce qu'**il comporte l'étape supplémentaire consistant à :
- à chaque exécution du deuxième script (script 2) conduisant à la détection d'une absence de connexion entre le navigateur et le serveur sur le réseau, faire apparaître, au moyen d'un quatrième script de la page d'affichage, une information d'erreur dans le premier cadre visible (102)

10. Document HTML adapté à la mise en oeuvre du procédé de test de l'état de connexion entre un client de type navigateur et un serveur de type HTTP selon l'une au moins des revendications précédentes, le document HTML étant structuré en un premier cadre visible (102) attaché à au moins à une page d'affichage, et un deuxième cadre invisible (103) attaché à au moins une page de données; **caractérisé en ce que** page d'affichage comporte au moins une variable (K) avec une valeur initiale préalablement déterminée, un premier script (SCRIPT 1) pour commander un téléchargement de la page de données, et un deuxième script (SCRIPT 2) pour comparer une valeur instantanée de la variable (K) avec la valeur initiale de ladite variable (K) et pour, en cas d'égalité, détecter ainsi une absence de connexion réseau entre le navigateur et le serveur, ou pour, en cas d'inégalité, détecter ainsi un état de connexion réseau entre le navigateur et le serveur ; et ladite page de données comportant au moins un troisième script (SCRIPT 3), exécuté automatiquement à chaque téléchargement de la page de données pour affecter à la variable (K) de la page d'affichage une valeur modifiée différente de la valeur initiale.

## Claims

1. A method of checking the client/server connection status in a digital network, said client being a navigator type client and the server a HTTP type server, said method comprising the various steps of:
- structuring a first HTML page accessible on the server, said page comprising at least one first visible frame (102) attached to at least one display page and one second invisible frame (103) attached to at least one data page;
- downloading (101) from the server, by means of the navigator, the first HTML page;
**characterized in that** it comprises the following steps:
- downloading (105) the display page and downloading (104) the data page, said display page comprising at least one variable (K) with a predetermined initial value, one first script (script 1) for controlling download of the data page and one second script (script 2) for comparing an instant value of the variable (K) with the initial value of said variable (K), said data page comprising at least one third script (script 3) that is automatically executed at each data page download for allocating a modified value differing from the initial value to the variable (K) of the display page;
- determining, each time the second script (script 2) is executed, whether the instant value of the variable (K) is the initial value of the variable (K) and, if the two values are equal, thus detecting the absence of a network connection between the navigator and the server and, if the two values differ, thus detecting a network connection status between the navigator and the server.

2. The method as set forth in the afore mentioned claim, **characterized in that** it comprises the various additional steps of:
- executing the first script (script 1) every M seconds;
- executing the second script (script 2) every N seconds, with N being greater than M.

3. The method as set forth in the afore mentioned claim, **characterized in that** the ratio between N and M ranges from 5 to 15.

4. The method as set forth in at least one of the afore mentioned claims, **characterized in that** it comprises the additional step of:
- allocating the initial value to the variable (K) anew each time the second script (script 2) is executed and results in detecting a navigator/server connection status.

5. The method as set forth in at least one of the afore mentioned claims, **characterized in that** it comprises the additional step of:
- updating the display page each time the second script (script 2) is executed and results in detecting a navigator/server connection status.

6. The method as set forth in at least one of the afore mentioned claims, **characterized in that** it comprises the additional step of:
updating the display page each time the third script (script 3) is executed.

7. The method as set forth in at least one of the claims 2 through 6, **characterized in that** it comprises the additional step of:
- issuing a command to stop any first script (script 1) execution until the second script (script 2) has been executed each time the third script (script 3) is executed.

8. The method as set forth in at least one of the afore mentioned claims, **characterized in that** it comprises the additional step of:
- directing an error message emitted by the navigator and related to information about the absence of a connection to the second invisible frame (103) each time the second script (script 2) is executed and results in detecting the absence of network connection between the navigator and the server.

9. The method as set forth in at least one of the afore mentioned claims, **characterized in that** it comprises the additional step of:
- displaying, by means of a fourth script of the display page, an error information in the first visible frame (102) each time the second script (script 2) is executed and results in detecting the absence of network connection between the navigator and the server.

10. An HTML file adapted for performing the method of checking the connection status between a navigator client and an HTTP server as set forth in at least one of the afore mentioned claims, said HTML file being structured so as to have one first visible frame (102) attached to at least one display page and one second invisible frame (103) attached to at least one data page, **characterized in that** said display page comprises at least one variable (K) with a predetermined initial value, one first script (script 1) for controlling download of the data page and one second script (script 2) for comparing an instant value of the variable (K) with the initial value of said variable (K), and for thus detecting the absence of a network connection between the navigator and the server if the values are equal and for thus detecting a network connection status between the navigator and the server, if the two values differ; said data page comprising at least one third script (script 3) that is automatically executed at each data page download for allocating a modified value differing from the initial value to the variable (K) of the display page.

## Patentansprüche

1. Verfahren zum Prüfen des Verbindungszustands zwischen einem Client und einem Server in einem digitalen Netz, wobei der Client ein Navigator-Client und der Server ein HTTP-Server ist, umfassend die folgenden verschiedenen Schritte:
- Einrichten einer auf dem Server zugänglichen ersten HTML-Seite, wobei die Seite mindestens einen ersten an mindestens einer Anzeigeseite angehängten sichtbaren Rahmen (102), und einen zweiten an mindestens einer Datenseite angehängten unsichtbaren Rahmen (103) aufweist;
- Herunterladen (101) der ersten HTML-Seite vom Server durch den Navigator;
**dadurch gekennzeichnet, dass** es folgende Schritte aufweist:
- Herunterladen (105) der Anzeigeseite und Herunterladen (104) der Datenseite, wobei die Anzeigeseite mindestens eine Variable (K) mit einem vorbestimmten Ausgangswert, einen ersten Skript (Skript 1) zur Steuerung des Herunterladens der Datenseite und einen zweiten Skript (Skript 2) zum Vergleichen eines aktuellen Werts der Variablen (K) mit dem Ausgangswert der Variablen (K) aufweist, und wobei die Datenseite mindestens einen automatisch beim jeweiligen Herunterladen der Datenseite ausgeführten dritten Skript (Skript 3) aufweist, um so der Variablen (K) der Anzeigeseite einen vom Ausgangswert sich unterscheidenden geänderten Wert zuzuordnen;
- Bestimmen, bei jeder Ausführung des zweiten Skripts (Skript 2), ob der aktuelle Wert der Variablen (K) dem Ausgangswert der Variablen (K) entspricht und, wenn die beiden Werte gleich sind, Erkennen einer nicht bestehenden Netzverbindung zwischen dem Navigator und dem Server, bzw. wenn sie ungleich sind, Erkennen einer bestehenden Netzverbindung zwischen dem Navigator und dem Server.

2. Verfahren nach dem vorangegangenen Anspruch, **dadurch gekennzeichnet, dass** es zusätzlich die folgenden unterschiedlichen Schritte umfasst:
- Ausführen des ersten Skripts (Skript 1) alle M Sekunden;
- Ausführen des zweiten Skripts (Skript 2) alle N Sekunden, wobei N größer ist als M.

3. Verfahren nach dem vorangegangenen Anspruch, **dadurch gekennzeichnet, dass** das Verhältnis zwischen N und M zwischen 5 und 15 beträgt.

4. Verfahren nach mindestens einem der vorangegangenen Ansprüche, **dadurch gekennzeichnet, dass** es den folgenden zusätzlichen Schritt aufweist:
- bei jeder Ausführung des zweiten Skripts (Skript 2), die zum Erkennen eines Verbindungszustands im Netz zwischen dem Navigator und dem Server führt, erneut der Variablen (K) den Ausgangswert zuordnen.

5. Verfahren nach mindestens einem der vorangegangenen Ansprüche, **dadurch gekennzeichnet, dass** es den folgenden zusätzlichen Schritt aufweist:
- bei jeder Ausführung des zweiten Skripts (Skript 2), die zum Erkennen eines Verbindungszustands im Netz zwischen dem Navigator und dem Server führt, eine Aktualisierung der Anzeigeseite durchführen.

6. Verfahren nach mindestens einem der vorangegangenen Ansprüche, **dadurch gekennzeichnet, dass** es den folgenden zusätzlichen Schritt aufweist:
- bei jeder Ausführung des dritten Skripts (Skript 3), eine Aktualisierung der Anzeigeseite durchführen.

7. Verfahren nach mindestens einem der Ansprüche 2 bis 6, **dadurch gekennzeichnet, dass** es den folgenden zusätzlichen Schritt aufweist:
- bei jeder Ausführung des dritten Skripts (Skript 3), Anordnen, dass die Ausführung des ersten Skripts (Skript 1) bis zu einer Ausführung des zweiten Skripts (Skript 2) angehalten wird.

8. Verfahren nach mindestens einem der vorangegangenen Ansprüche, **dadurch gekennzeichnet, dass** es den folgenden zusätzlichen Schritt aufweist:
- bei jeder Ausführung des zweiten Skripts (Skript 2), die zum Erkennen einer nicht bestehenden Verbindung im Netz zwischen dem Navigator und dem Server führt, Richten einer vom Navigator gesandten Fehlernachricht bezüglich einer nicht bestehenden Verbindung an den zweiten unsichtbaren Rahmen (103).

9. Verfahren nach mindestens einem der vorangegangenen Ansprüche, **dadurch gekennzeichnet, dass** es den folgenden zusätzlichen Schritt aufweist:
- bei jeder Ausführung des zweiten Skripts (Skript 2), die zum Erkennen einer nicht bestehenden Verbindung im Netz zwischen dem Navigator und dem Server führt, mittels eines vierten Skripts der Anzeigeseite eine Fehlerinformation in dem ersten sichtbaren Rahmen (102) erscheinen lassen.

10. HTML-Datei zum Durchführen des Verfahrens zur Prüfung des Verbindungszustands zwischen einem Navigator-Client und einem HTTP-Server nach einem der vorangegangenen Ansprüche, wobei die HTML-Datei aus einem an mindestens einer Anzeigeseite angehängten ersten sichtbaren Rahmen (102) und einem an mindestens einer Datenseite angehängten Rahmen (103) aufgebaut ist, **dadurch gekennzeichnet, dass** die Anzeigeseite mindestens eine Variable (K) mit einem vorbestimmten Ausgangswert, einen ersten Skript (Skript 1) zur Steuerung eines Herunterladens der Datenseite und einen zweiten Skript (Skript 2) zum Vergleichen eines aktuellen Werts der Variablen (K) mit dem Ausgangswert der Variablen (K) aufweist, und zum Erkennen einer nicht bestehenden Netzverbindung zwischen dem Navigator und dem Server, wenn die Werte gleich sind, und zum Erkennen einer bestehenden Netzverbindung zwischen dem Navigator und dem Server, wenn die Werte ungleich sind; und wobei die Datenseite mindestens einen automatisch beim jeweiligen Herunterladen der Datenseite ausgeführten dritten Skript (Skript 3) aufweist, um so der Variablen (K) der Anzeigeseite einen vom Ausgangswert sich unterscheidenden geänderten Wert zuzuordnen.
